# EUROPEAN PATENT APPLICATION

(11) **EP 4 411 861 A1**
(43) Date of publication of application: **07.08.2024**
(21) Application number: 22875504.7
(22) Date of filing: 23.06.2022
(51) Int. Cl.: H01M 4/131, H01M 4/505, H01M 4/525

(54) **NONAQUEOUS ELECTROLYTE SECONDARY BATTERY**

(30) Priority: 28.09.2021 JP 2021157967
(71) Applicant: Panasonic Energy Co., Ltd., Osaka 570-8511 (JP)
(72) Inventor: AOTANI, Masashi, Kadoma-shi, Osaka 571-0057 (JP)
(74) Representative: Novagraaf International SA
(86) International application number: PCT/JP2022/025079
(87) International publication number: WO 2023/053625

(57) **Abstract**

The present invention provides a nonaqueous electrolyte secondary battery which has excellent safety and excellent battery characteristics. A nonaqueous electrolyte secondary battery according to one embodiment of the present disclosure is provided with a positive electrode, a negative electrode, a separator that separates the positive electrode and the negative electrode from each other, and a nonaqueous electrolyte. With respect to this nonaqueous electrolyte secondary battery, the positive electrode comprises a positive electrode collector, a first positive electrode mixture layer that is formed on the surface of the positive electrode collector, and a second positive electrode mixture layer that is formed on the surface of the first positive electrode mixture layer; the first positive electrode mixture layer contains a first positive electrode active material; the second positive electrode mixture layer contains a second positive electrode active material; and the Ni content ratio in the second positive electrode active material is lower than the Ni content ratio in the first positive electrode active material.

## Description

### TECHNICAL FIELD

The present disclosure relates to a non-aqueous electrolyte secondary battery.

### BACKGROUND

In recent years, lithium-containing composite oxides containing Ni have attracted attention as positive electrode active materials with high energy density. When a lithium-containing composite oxide with a high Ni content is used, the battery capacity increases, but the battery temperature may become increased at times of abnormality. Patent Literature 1 discloses a technique of suppressing an increase in the temperature of a battery upon nail penetration by using a positive electrode in which, between a positive electrode current collector and a first layer containing a lithium-containing composite oxide with a Ni content of 70 % or less, there is formed a second layer containing a lithium-containing composite oxide with a Ni content of 50 % or less.

### CITATION LIST

### PATENT LITERATURE

PATENT LITERATURE 1: Japanese Unexamined Patent Application Publication No. 2019-140039

### SUMMARY

### TECHNICAL PROBLEM

A lithium-containing composite oxide with a high Ni content tends to produce a large amount of self-generated heat in a high-temperature environment, and its use involves an issue of improving the thermal stability. Further, in a lithium-containing composite oxide with a high Ni content, a large amount of Li is extracted during charging, and the layered crystal structure tends to be easily broken. Accordingly, when a lithium-containing composite oxide with a high Ni content is used, the battery capacity tends to be decreased due to repeated charging and discharging. This tendency is particularly noticeable in a high-temperature environment. In the technique disclosed in Patent Literature 1, no consideration has been made regarding the thermal stability or regarding deterioration of the cycle characteristic in a high-temperature environment, and there is still room for improvement.

An object of the present disclosure is to provide a non-aqueous electrolyte secondary battery having a high level of safety and excellent battery characteristics.

### SOLUTION TO PROBLEM

A non-aqueous electrolyte secondary battery according to an aspect of the present disclosure includes a positive electrode, a negative electrode, a separator that isolates the positive electrode and the negative electrode from each other, and a non-aqueous electrolyte. The positive electrode has a positive electrode current collector, a first positive electrode mixture layer formed on a surface of the positive electrode current collector, and a second positive electrode mixture layer formed on a surface of the first positive electrode mixture layer. The first positive electrode mixture layer contains a first positive electrode active material represented by general formula LiₐNi_{b}M1_{c}M2_{d}Oₑ (where 0.9 ≤ a ≤ 1.2, 0.90 ≤ b ≤ 0.95, 0 ≤ c ≤ 0.10, 0 ≤ d ≤ 0.05, 1.9 ≤ e ≤ 2.1, b+c+d = 1, M1 is one or more elements selected from the group consisting of Co, Al, and Mn, and M2 is one or more elements selected from the group consisting of Ti, Mg, and Zr). The second positive electrode mixture layer contains a second positive electrode active material represented by general formula Li_{f}Ni_{g}M3ₕM4ᵢOⱼ (where 0.9 ≤ f ≤ 1.2, 0.80 ≤ g ≤ 0.90, 0 ≤ h ≤ 0.20, 0 ≤ i ≤ 0.05, 1.9 ≤ j ≤ 2.1, g+h+i = 1, M3 is one or more elements selected from the group consisting of Co, Al, and Mn, and M4 is one or more elements selected from the group consisting of Ti, Mg, and Zr), and g and b satisfy g < b.

### ADVANTAGEOUS EFFECTS OF INVENTION

According to the non-aqueous electrolyte secondary battery according to the present disclosure, safety and battery characteristics can be improved.

### BRIEF DESCRIPTION OF DRAWINGS

[FIG. 1] FIG. 1 is an axial cross-sectional view of a non-aqueous electrolyte secondary battery according to an example embodiment.
[FIG. 2] FIG. 2 is a cross-sectional view of a positive electrode according to an example embodiment.

### DESCRIPTION OF EMBODIMENTS

An example embodiment of a non-aqueous electrolyte secondary battery according to the present disclosure will now be described in detail by reference to the drawings. Although a cylindrical battery in which a spiral-type electrode assembly is housed in a cylindrical outer casing is described below as an example, the outer casing is not limited to being cylindrical, and may be, for example, rectangular, coin-shaped, or the like, or may be a pouch-shaped casing composed of a laminate sheet including a metal layer and a resin layer. Further, the electrode assembly may be a laminate-type electrode assembly formed by alternately laminating a plurality of positive electrodes and a plurality of negative electrodes via separators. In the present specification, the expression "numerical value (A) to numerical value (B)" means greater than or equal to numerical value (A) and less than or equal to numerical value (B).

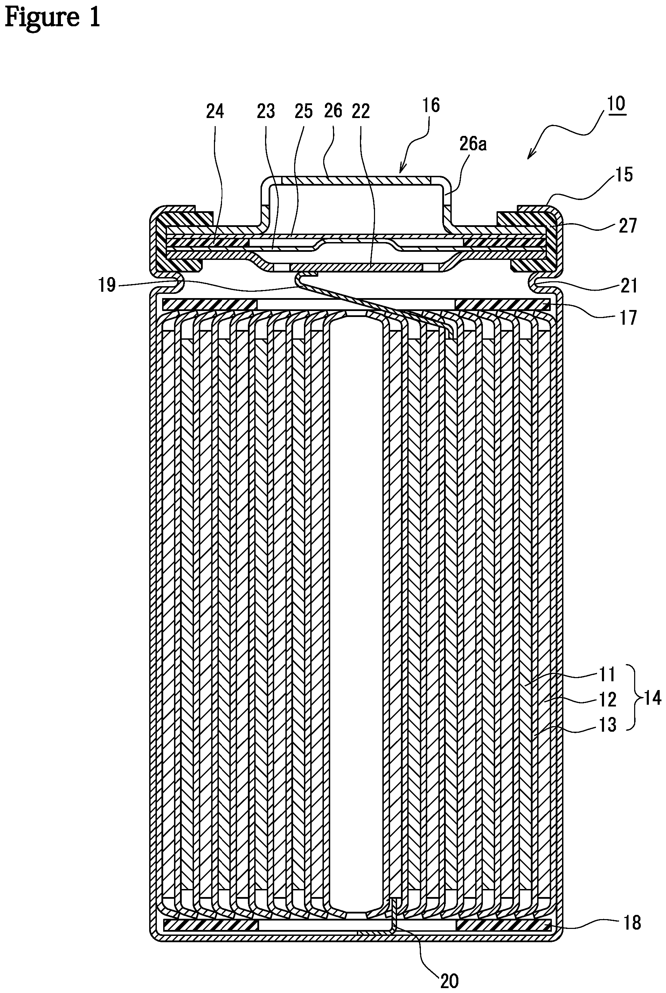

FIG. 1 is an axial cross-sectional view of a cylindrical secondary battery 10 according to an example embodiment. In the secondary battery 10 shown in FIG. 1, an electrode assembly 14 and a non-aqueous electrolyte (not shown in drawing) are housed in an outer casing 15. The electrode assembly 14 has a spiral structure formed by winding a positive electrode 11 and a negative electrode 12 with an interposed separator 13. In the following, for convenience of explanation, a side toward a sealing assembly 16 will be described as "upper", and a side toward the bottom portion of the outer casing 15 will be described as "lower".

By having an open end portion of the outer casing 15 at its upper part being closed with the sealing assembly 16, the interior of the secondary battery 10 is hermetically sealed. Insulation plates 17, 18 are provided above and below the electrode assembly 14, respectively. A positive electrode lead 19 extends upward through a through hole in the insulation plate 17, and is welded to a lower surface of a filter 22, which is the bottom plate of the sealing assembly 16. In the secondary battery 10, a cap 26, which is the top plate of the sealing assembly 16 electrically connected to the filter 22, serves as the positive electrode terminal. Further, a negative electrode lead 20 passes through a through hole in the insulation plate 18, extends toward the bottom portion of the outer casing 15, and is welded to the inner surface of the bottom portion of the outer casing 15. In the secondary battery 10, the outer casing 15 serves as the negative electrode terminal.

The outer casing 15 is, for example, a bottomed cylindrical metal outer can. A gasket 27 is provided between the outer casing 15 and the sealing assembly 16, and hermetic sealing of the interior of the secondary battery 10 is thereby ensured. The outer casing 15 has a grooved portion 21 which is formed, for example, by pressing a side surface portion from outside. The grooved portion 21 is preferably formed in an annular shape along the circumferential direction of the outer casing 15, and supports the sealing assembly 16 on its upper surface via the gasket 27.

The sealing assembly 16 comprises the filter 22, a lower valve member 23, an insulation member 24, an upper valve member 25, and the cap 26, which are stacked in this order from the electrode assembly 14 side. Each of the members constituting the sealing assembly 16 has, for example, a disk shape or a ring shape, and the respective members other than the insulation member 24 are electrically connected to each other. The lower valve member 23 and the upper valve member 25 are connected to each other at their central portions, and the insulation member 24 is interposed between peripheral edge portions of these valve members. When the internal pressure of the battery increases due to abnormal heat generation, for example, the lower valve member 23 ruptures, and the upper valve member 25 is thereby caused to swell toward the cap 26 side and separate from the lower valve member 23, so that electrical connection between the two valve members is cut off. When the internal pressure increases further, the upper valve member 25 ruptures, and gas is discharged from an opening 26a in the cap 26.

A detailed description will be given below regarding the positive electrode 11, the negative electrode 12, the separator 13, and the non-aqueous electrolyte which constitute the secondary battery 10, and especially regarding the positive electrode 11.

### [Positive Electrode]

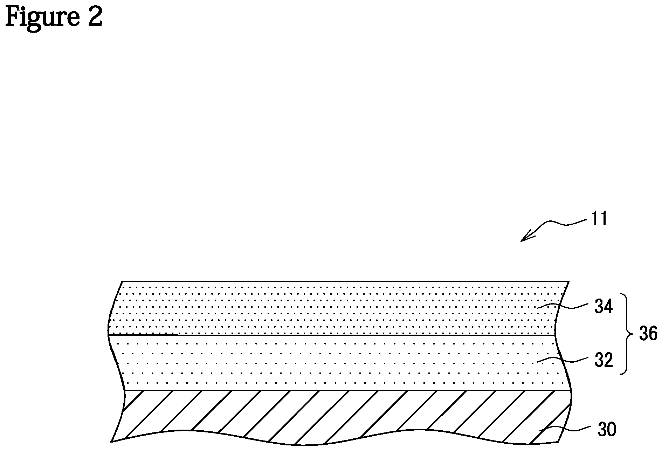

The configuration of the positive electrode 11 will now be described by reference to FIG. 2. FIG. 2 is a cross-sectional view of a positive electrode 11 according to an example embodiment. The positive electrode 11 comprises a positive electrode current collector 30, a first positive electrode mixture layer 32 formed on a surface of the positive electrode current collector 30, and a second positive electrode mixture layer 34 formed on a surface of the first positive electrode mixture layer 32. The first positive electrode mixture layer 32 and the second positive electrode mixture layer 34 may be collectively referred to as a positive electrode mixture layer 36.

As the positive electrode current collector 30, it is possible to use a foil of a metal such as aluminum that is stable in the potential range of the positive electrode, a film having such a metal disposed on its surface layer, and the like. The thickness of the positive electrode current collector 30 is, for example, 10 µm to 30 µm.

The positive electrode mixture layer 36 is preferably formed on both sides of the positive electrode current collector 30. The thickness of the positive electrode mixture layer 36 on one side of the positive electrode current collector 30 is preferably 50 µm to 200 µm, and more preferably 70 µm to 150 µm. The positive electrode mixture layer 36 contains, for example, a positive electrode active material, a conductive agent, and a binder.

Examples of the conductive agent contained in the positive electrode mixture layer 36 include carbon-based particles such as carbon black (CB), acetylene black (AB), Ketjen black, carbon nanotubes (CNT), graphene, and graphite. These may be used alone or by combining two or more thereof.

Examples of the binder contained in the positive electrode mixture layer 36 include fluororesins such as polytetrafluoroethylene (PTFE) and polyvinylidene fluoride (PVDF), polyacrylonitrile (PAN), polyimide resins, acrylic resins, and polyolefin resins. A single type among these may be used alone, or two or more types may be used in combination.

The positive electrode active material contained in the positive electrode mixture layer 36 is different between the first positive electrode mixture layer 32 and the second positive electrode mixture layer 34. That is, the first positive electrode mixture layer 32 contains a first positive electrode active material, and the second positive electrode mixture layer 34 contains a second positive electrode active material. It is noted that so long as the object of the present disclosure is not impaired, the first positive electrode mixture layer 32 may contain a positive electrode active material other than the first positive electrode active material, and the second positive electrode mixture layer 34 may contain a positive electrode active material other than the second positive electrode active material.

The first positive electrode active material is represented by general formula LiₐNi_{b}M1_{c}M2_{d}Oₑ (where 0.9 ≤ a ≤ 1.2, 0.90 ≤ b ≤ 0.95, 0 ≤ c ≤ 0.10, 0 ≤ d ≤ 0.05, 1.9 ≤ e ≤ 2.1, b+c+d = 1, M1 is one or more elements selected from the group consisting of Co, Al, and Mn, and M2 is one or more elements selected from the group consisting of Ti, Mg, and Zr).

The second positive electrode active material is represented by general formula Li_{f}Ni_{g}M3ₕM4ᵢOⱼ (where 0.9 ≤ f ≤ 1.2, 0.80 ≤ g ≤ 0.90, 0 ≤ h ≤ 0.20, 0 ≤ i ≤ 0.05, 1.9 ≤ j ≤ 2.1, g+h+i = 1, M3 is one or more elements selected from the group consisting of Co, Al, and Mn, and M4 is one or more elements selected from the group consisting of Ti, Mg, and Zr).

The letter "a" denoting the number of moles of Li per 1 mole of the first positive electrode active material and the letter "f' denoting the number of moles of Li per 1 mole of the second positive electrode active material are both 0.9 to 1.2, preferably 0.95 to 1.05, and more preferably 1. When "a" is less than 0.9, the battery capacity may be lower than when "a" is within the above range. When "a" is 1.2 or more, the charge-discharge cycle characteristic may be deteriorated compared to when "a" is within the above range.

The letter "b", which indicates the ratio of Ni to the total number of moles of metal elements other than Li in the first positive electrode active material (hereinafter may be referred to as Ni content; the same applies to the second positive electrode active material), is 0.90 to 0.95. Further, the letter "g", which indicates the ratio of Ni to the total number of moles of metal elements other than Li in the second positive electrode active material, is 0.80 to 0.90, and g and b satisfy g < b. With these features, a secondary battery 10 having a high level of safety and excellent battery characteristics can be obtained. Since the amount of self-generated heat in a positive electrode active material tends to increase with increasing Ni content, the temperature of a battery containing a positive electrode active material with a high Ni content may become increased. Further, since a positive electrode active material with a high Ni content tends to cause side reactions with the electrolyte, the battery capacity in a battery containing a positive electrode active material with a high Ni content tends to become reduced due to repeated charging and discharging. By forming the positive electrode mixture layer to have a laminate structure and to be configured such that the second positive electrode active material with a Ni content lower than that of the first positive electrode active material is arranged on the surface side in contact with the electrolyte, the safety and the cycle characteristic can be improved. Further, by setting "g" to 0.80 or more, a high-capacity battery can be obtained.

The letter "c", which indicates the ratio of M1 to the total number of moles of metal elements other than Li in the first positive electrode active material, is 0 to 0.10, preferably 0.03 to 0.10, and more preferably 0.05 to 0.10. Further, the letter "h", which indicates the ratio of M3 to the total number of moles of metal elements other than Li in the second positive electrode active material, is 0 to 0.20, preferably 0.05 to 0.20, and more preferably 0.10 to 0.20. Each of M1 and M3 is one or more elements selected from the group consisting of Co, Al, and Mn. Since Co has high electron conductivity, Co can reduce resistance. Al and Mn can stabilize the crystal structure of the positive electrode active material. M1 and M3 may be elements different from each other, but are preferably the same element(s). Both M1 and M3 may include Co and Al.

The letter "d", which indicates the ratio of M2 to the total number of moles of metal elements other than Li in the first positive electrode active material, and the letter "i", which indicates the ratio of M4 to the total number of moles of metal elements other than Li in the second positive electrode active material, are both 0 to 0.05, preferably 0 to 0.03, and more preferably 0. Each of M2 and M4 is one or more elements selected from the group consisting of Ti, Mg, and Zr. M2 and M4 may be elements different from each other, or may be the same element(s).

The thickness ratio of the first positive electrode mixture layer 32 to the second positive electrode mixture layer 34 is preferably 90:10 to 60:40. With this feature, the battery capacity can be further increased while improving the battery's thermal stability and cycle characteristic in a high-temperature environment.

The content of the first positive electrode active material in the first positive electrode mixture layer 32 is, for example, 90 % by mass to 99 % by mass, and preferably 95 % by mass to 99 % by mass, relative to the total mass of the first positive electrode mixture layer 32.

No particular limitation is imposed on the method for producing the positive electrode 11. For example, the positive electrode 11 with a positive electrode mixture layer having a two-layer structure as shown in FIG. 2 can be produced by: separately preparing a first positive electrode mixture slurry containing a positive electrode active material, a conductive agent, and a binder, and a second positive electrode mixture slurry containing a positive electrode active material, a conductive agent, and a binder; applying the first positive electrode mixture slurry onto both sides of the positive electrode current collector 30 and carrying out drying; applying on top thereof the second positive electrode mixture slurry and carrying out drying; and then rolling the applied coating with a roller. Alternatively, after applying the first positive electrode mixture slurry, without carrying out drying, the second positive electrode mixture slurry may be applied on top thereof, and then drying may be carried out.

### [Negative Electrode]

The negative electrode 12 comprises a negative electrode current collector and a negative electrode mixture layer formed on a surface of the negative electrode current collector. As the negative electrode current collector, it is possible to use a foil of a metal such as copper that is stable in the potential range of the negative electrode, a film having such a metal disposed on its surface layer, and the like. The thickness of the negative electrode current collector is, for example, 5 µm to 30 µm.

The negative electrode mixture layer is preferably formed on both sides of the negative electrode current collector. The thickness of the negative electrode mixture layer on one side of the negative electrode current collector is, for example, 10 µm to 150 µm. The negative electrode mixture layer contains, for example, a negative electrode active material and a binder. The negative electrode can be produced, for example, by applying a negative electrode mixture slurry containing the negative electrode active material, the binder, and the like onto both sides of the negative electrode current collector, drying the applied coating, and then rolling the applied coating using a roller.

No particular limitation is imposed on the negative electrode active material contained in the negative electrode mixture layer so long as the negative electrode active material can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, it is possible to use a metal that forms an alloy with Li such as Si or Sn, a metal compound containing Si, Sn, or the like, a lithium titanium composite oxide, and so on. For example, in combination with graphite, a Si-containing compound represented by SiOₓ (where 0.5 ≤ x ≤ 1.6), a Si-containing compound in which fine particles of Si are dispersed in a lithium silicate phase represented by Li_{2y}SiO_{(2+y)} (where 0 < y < 2), or the like may be used.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). A single type among these may be used alone, or two or more types may be used in combination.

### [Separator]

The separator 13 isolates the positive electrode 11 and negative electrode 12 from each other. As the separator 13, for example, a porous sheet having ion permeability and insulation property is used. Specific examples of the porous sheet include a microporous film, woven fabric, and non-woven fabric. As the material of the separator, olefin resins such as polyethylene and polypropylene, cellulose, and the like are suitable. The separator 13 may be a laminate having a cellulose fiber layer and a layer of thermoplastic resin fibers made of olefin resin or the like. Further, the separator may be a multilayer separator including a polyethylene layer and a polypropylene layer. It is also possible to use a separator 13 having a surface coated with a material such as aramid resin or ceramic.

### [Non-Aqueous Electrolyte]

The non-aqueous electrolyte may contain a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least part of hydrogens in the above solvents with halogen atoms such as fluorine. Examples of the halogen-substituted product include fluorinated cyclic carbonate esters such as fluoroethylene carbonate (FEC), fluorinated chain carbonate esters, fluorinated chain carboxylate esters such as methyl fluoropropionate (FMP), and the like.

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate.

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borates such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) (where each of 1 and m is an integer of 0 or greater). As the lithium salt, a single type among the above may be used alone, or a plurality of types may be mixed and used. Among the foregoing, it is preferable to use LiPF₆ in consideration of ion conductivity, electrochemical stability, and the like. The concentration of the lithium salt is preferably 0.8 mol to 1.8 mol per 1 liter of the non-aqueous solvent.

### EXAMPLES

While the present disclosure will be further described below using Examples, the present disclosure is not limited to these Examples.

### <Example>

### [Production of Positive Electrode]

As the first positive electrode active material, a lithium transition metal composite oxide represented by LiNi_{0.91}Co_{0.06}Al_{0.03}O₂ was used. A first positive electrode mixture slurry was prepared by mixing the first positive electrode active material, acetylene black (AB), and polyvinylidene fluoride (PVDF) at a mass ratio of 100:1:0.9, and kneading the mixture while adding N-methyl pyrrolidone (NMP). Next, the first positive electrode mixture slurry was applied using a doctor blade method onto both sides of a positive electrode current collector made of aluminum foil having a thickness of 15 µm, and the applied coating was dried to thereby form a first positive electrode mixture layer (in an uncompressed state).

As the second positive electrode active material, a lithium transition metal composite oxide represented by LiNi_{0.88}Co_{0.09}Al_{0.03}O₂ was used. A second positive electrode mixture slurry was prepared by mixing the second positive electrode active material, acetylene black (AB), and polyvinylidene fluoride (PVDF) at a mass ratio of 100:1:0.9, and kneading the mixture while adding N-methyl pyrrolidone (NMP). Next, the second positive electrode mixture slurry was applied using a doctor blade method onto both sides of the first positive electrode mixture layer, and the applied coating was dried to thereby form a second positive electrode mixture layer laminated on the entire surface of the first positive electrode mixture layer. After rolling the first positive electrode mixture layer and the second positive electrode mixture layer using a roller, the product was cut into a predetermined electrode size, and a positive electrode was thereby produced. After the rolling, the ratio between the thickness of the first positive electrode mixture layer and the thickness of the second positive electrode mixture layer was 25:75. Further, at a part of the positive electrode, there was provided an exposed portion where the positive electrode current collector was exposed, and an aluminum positive electrode lead was attached to the exposed portion.

### [Production of Negative Electrode]

95 parts by mass of graphite and 5 parts by mass of SiO were mixed, and this mixture was used as the negative electrode active material. A negative electrode mixture slurry was prepared by kneading the negative electrode active material, carboxymethyl cellulose (CMC), and styrene-butadiene rubber (SBR) in water such that their mass ratio was 100:1:1. Next, the negative electrode mixture slurry was applied using a doctor blade method onto both sides of a negative electrode current collector made of copper foil, and after drying, the coating was rolled with a roller. The product was cut into a predetermined electrode size, and a negative electrode was thereby produced. Further, at a part of the negative electrode, there was provided an exposed portion where a surface of the negative electrode current collector was exposed, and a nickel negative electrode lead was attached to the exposed portion.

### [Preparation of Non-Aqueous Electrolyte]

Into a mixed solvent obtained by mixing ethylene carbonate (EC) and dimethyl carbonate (DMC) at a volume ratio of 1:3, lithium hexafluorophosphate (LiPF₆) was dissolved at a concentration of 1.5 mol/L. Further, vinylene carbonate (VC) was dissolved into the above mixed solvent at a concentration of 5 % by mass, and a non-aqueous electrolyte (or electrolyte solution) was thereby prepared.

### [Production of Secondary Battery]

A spiral-type electrode assembly was produced by spirally winding the positive electrode and the negative electrode with an interposed separator made of polyethylene film having a thickness of 12 µm. This electrode assembly was placed in a bottomed cylindrical outer casing, and the negative electrode lead was welded to the bottom portion of the outer casing. Next, the positive electrode lead was welded to a sealing assembly, and after injection of the above non-aqueous electrolyte, the opening of the outer casing was sealed with the sealing assembly, and a secondary battery was thereby obtained.

### [Evaluation of Battery Capacity and Cycle Characteristic]

In an ambient temperature of 45 °C, the above secondary battery was charged at a constant current of 1380 mA until reaching 4.2 V, and then charged at a constant voltage of 4.2V until reaching 92 mA. Subsequently, discharging was performed at a constant current of 2300 mA until reaching 2.5 V. Using this charging and discharging process as one cycle, 200 cycles were carried out, and the capacity retention rate was determined by the following formula. Further, the discharge capacity in the first cycle was regarded as the battery capacity. Capacity retention rate = (Discharge capacity in the 200th cycle / Discharge capacity in the 1st cycle) × 100

### [Evaluation of Safety]

In an ambient temperature of 25 °C, the above secondary battery was charged at a constant current of 1380 mA until reaching 4.2 V, and then charged at a constant voltage of 4.2V until reaching 92 mA. Subsequently, the secondary battery was placed in a thermostatic chamber. The temperature of the thermostatic chamber was increased from 25 °C to 135 °C at a rate of 5 °C/min, and the temperature of a side portion of the secondary battery was measured with a thermocouple. Based on the maximum temperature reached by the secondary battery at that time, the safety of the secondary battery was evaluated.

### <Example 2>

A secondary battery was produced and evaluated in the same manner as in Example 1 except that, in the production of the positive electrode, a lithium transition metal composite oxide represented by LiNi_{0.82}Co_{0.15}Al_{0.03}O₂ was used as the second positive electrode active material.

### <Comparative Example 1>

A secondary battery was produced and evaluated in the same manner as in Example 1 except that, in the production of the positive electrode, a lithium transition metal composite oxide represented by LiNi_{0.88}Co_{0.09}Al_{0.03}O₂ was used as the first positive electrode active material, and a lithium transition metal composite oxide represented by LiNi_{0.91}Co_{0.06}Al_{0.03}O₂ was used as the second positive electrode active material.

### <Comparative Example 2>

A secondary battery was produced and evaluated in the same manner as in Example 1 except that, in the production of the positive electrode, a lithium transition metal composite oxide represented by LiNi_{0.82}Co_{0.15}Al_{0.03}O₂ was used as the first positive electrode active material, and a lithium transition metal composite oxide represented by LiNi_{0.91}Co_{0.06}Al_{0.03}O₂ was used as the second positive electrode active material.

### <Comparative Example 3>

A secondary battery was produced and evaluated in the same manner as in Example 1 except that, in the production of the positive electrode, a lithium transition metal composite oxide represented by LiNi_{0.91}Co_{0.06}Al_{0.03}O₂ was used as the second positive electrode active material.

### <Comparative Example 4>

A secondary battery was produced and evaluated in the same manner as in Example 1 except that, in the production of the positive electrode, a lithium transition metal composite oxide represented by LiNi_{0.88}Co_{0.09}Al_{0.03}O₂ was used as the first positive electrode active material.

### <Comparative Example 5>

A secondary battery was produced and evaluated in the same manner as in Example 1 except that, in the production of the positive electrode, a lithium transition metal composite oxide represented by LiNi_{0.82}Co_{0.15}Al_{0.03}O₂ was used as the first positive electrode active material and the second positive electrode active material.

Table 1 shows the evaluation results for each of the secondary batteries of the Examples and Comparative Examples. Table 1 also shows the values of Ni content in the first positive electrode mixture layer and in the second positive electrode mixture layer, and the thickness ratio of the first positive electrode mixture layer to the second positive electrode mixture layer.

**[Table 1]**

| | Positive electrode | | | Battery characteristics | | Safety |
|---|---|---|---|---|---|---|
| | Ni content in 1st mixture layer [%] | Ni content in 2nd mixture layer [%] | Thickness ratio 1st mixture layer : 2nd mixture layer | Battery capacity [mAh] | Capacity retention rate [%] | Maximum temperature reached [°C] |
| Example 1 | 91 | 88 | 75:25 | 4594 | 88 | 137 |
| Example 2 | 91 | 82 | 75:25 | 4577 | 90 | 135 |
| Comparative Example 1 | 88 | 91 | 75:25 | 4583 | 87 | 140 |
| Comparative Example 2 | 82 | 91 | 75:25 | 4531 | 87 | 140 |
| Comparative Example 3 | 91 | 91 | 75:25 | 4600 | 86 | 140 |
| Comparative Example 4 | 88 | 88 | 75:25 | 4577 | 87 | 137 |
| Comparative Example 5 | 82 | 82 | 75:25 | 4508 | 90 | 135 |

The secondary batteries of the Examples had excellent battery characteristics (i.e., battery capacity and cycle characteristic) and a high level of safety (i.e., thermal stability). On the other hand, in the secondary battery of Comparative Example 1 in which the Ni content in the second positive electrode active material was higher than the Ni content in the first positive electrode active material, the cycle characteristic and the thermal stability were less favorable than in the secondary batteries of the Examples. Further, in the Comparative Examples in which the Ni content in the first positive electrode active material was lower than that in Comparative Example 1, the battery capacity, in addition to the cycle characteristic and the thermal stability, was less favorable than in the secondary batteries of the Examples. In the secondary batteries of Comparative Examples 3 to 5 in which the values of Ni content in the first positive electrode active material and in the second positive electrode mixture layer were equal, either the battery characteristics or the level of safety was less favorable than in the Examples.

### REFERENCE SIGNS LIST

10 secondary battery; 11 positive electrode; 12 negative electrode; 13 separator; 14 electrode assembly; 15 outer casing; 16 sealing assembly; 17, 18 insulation plate; 19 positive electrode lead; 20 negative electrode lead; 21 grooved portion; 22 filter; 23 lower valve member; 24 insulation member; 25 upper valve member; 26 cap; 26a opening; 27 gasket; 30 positive electrode current collector; 32 first positive electrode mixture layer; 34 second positive electrode mixture layer; 36 positive electrode mixture layer.

## Claims

1. A non-aqueous electrolyte secondary battery, comprising a positive electrode, a negative electrode, a separator that isolates the positive electrode and the negative electrode from each other, and a non-aqueous electrolyte, wherein
the positive electrode comprises a positive electrode current collector, a first positive electrode mixture layer formed on a surface of the positive electrode current collector, and a second positive electrode mixture layer formed on a surface of the first positive electrode mixture layer,
the first positive electrode mixture layer contains a first positive electrode active material represented by general formula LiₐNi_{b}M1_{c}M2_{d}Oₑ (where 0.9 ≤ a ≤ 1.2, 0.90 ≤ b ≤ 0.95, 0 ≤ c ≤ 0.10, 0 ≤ d ≤ 0.05, 1.9 ≤ e ≤ 2.1, b+c+d = 1, M1 is one or more elements selected from the group consisting of Co, Al, and Mn, and M2 is one or more elements selected from the group consisting of Ti, Mg, and Zr),
the second positive electrode mixture layer contains a second positive electrode active material represented by general formula Li_{f}Ni_{g}M3ₕM4ᵢOⱼ (where 0.9 ≤ f ≤ 1.2, 0.80 ≤ g ≤ 0.90, 0 ≤ h ≤ 0.20, 0 ≤ i ≤ 0.05, 1.9 ≤ j ≤ 2.1, g+h+i = 1, M3 is one or more elements selected from the group consisting of Co, Al, and Mn, and M4 is one or more elements selected from the group consisting of Ti, Mg, and Zr), and
g and b satisfy g < b.

2. The non-aqueous electrolyte secondary battery according to claim 1, wherein a thickness ratio of the first positive electrode mixture layer to the second positive electrode mixture layer is 90:10 to 60:40.
